# EUROPÄISCHE PATENTSCHRIFT

(11) **EP 4 155 688 B1**
(45) Veröffentlichungstag und Bekanntmachung des Hinweises auf die Patenterteilung: **07.10.2026**
(21) Anmeldenummer: 22188030.5
(22) Anmeldetag: 01.08.2022
(51) Int. Cl.: G01F 23/02, G01F 23/38, G01F 23/00, F16N 39/00, F16N 19/00

(54) **VORRICHTUNG ZUM MESSEN EINES FLÜSSIGKEITSNIVEAUS EINES MEDIUMS MIT EINER HOHEN TEMPERATUR, BEHÄLTER, KÄLTEMITTELMASCHINE ODER KÄLTEKREISLAUF MIT EINER SOLCHEN VORRICHTUNG**
DEVICE FOR MEASURING THE LIQUID LEVEL OF A MEDIUM WITH A HIGH TEMPERATURE, CONTAINER, REFRIGERANT MACHINE OR REFRIGERATION CYCLE WITH SUCH A DEVICE
DISPOSITIF DE MESURE D'UN NIVEAU DE LIQUIDE D'UN MILIEU PRÉSENTANT UNE TEMPÉRATURE ÉLEVÉE, RÉCIPIENT, MACHINE FRIGORIFIQUE OU CIRCUIT FRIGORIFIQUE POURVU D'UN TEL DISPOSITIF

(30) Priorität: 21.09.2021 DE 102021124439
(43) Veröffentlichungstag der Anmeldung: 29.03.2023
(73) Patentinhaber: Armaturenwerk Altenburg GmbH, 04600 Altenburg (DE)
(72) Erfinder: Mikesch, Lucas, 04626 Schmölln (DE)
(74) Vertreter: Westphal, Mussgnug & Partner Patentanwälte mbB

(56) Entgegenhaltungen:
- EP-A1- 3 885 715
- WO-A1-2017/098346
- US-A- 2 615 338
- US-A- 6 125 642

## Beschreibung

Die vorliegende Erfindung betrifft eine Vorrichtung zum Messen eines Flüssigkeitsniveaus eines heißen Mediums, insbesondere Öl, in einem Behälter mit den Merkmalen des Patentanspruchs 1, einen Behälter mit einer solchen Vorrichtung mit den Merkmalen des Patentanspruchs 13 und eine Kältemittelmaschine oder Kältekreislauf mit einer solchen Vorrichtung mit den Merkmalen des Patentanspruchs 14.

Vorrichtungen zum Messen eines Flüssigkeitsniveaus eines Mediums sind aus dem Stand der Technik in unterschiedlichen Ausgestaltungen vorbekannt. Derartige Vorrichtungen umfassen ein Messgerät, wobei zur elektronischen Erfassung des Flüssigkeitsniveaus unterschiedliche Messtechniken zur Verfügung stehen. Verbreitet sind beispielsweise schwimmerbasierte, optische oder akustische Messtechniken. Die Vorrichtungen zum Messen eines Flüssigkeitsniveaus eines Mediums kommen in Maschinen oder Anlagen zur Anwendung, welche einen kontinuierlichen Bedarf eines Mediums, insbesondere Schmiermittel bzw. Öl, für den sicheren und effizienten Betrieb haben. Eine zuverlässige Überwachung des Flüssigkeitsniveaus ist daher zwingend notwendig.

Kältemittelmaschinen, insbesondere Schraubenverdichter, sind oftmals Ölabscheidern nachgeschaltet, um Ölschlag in den angebundenen Kältekreisläufen zu vermeiden. Das dort abgeschiedene Öl steht unter einem hohen Druck und weist eine hohe Temperatur auf und wird an die Kältemittelmaschine zurückgeführt.

Derartige Vorrichtungen zum Messen eines Flüssigkeitsniveaus haben sich in der Vergangenheit bewährt, jedoch stellen die hohen Drücke und die hohen Temperaturen eine besondere Herausforderung dar. Beispielsweise werden bei Kältemittelmaschinen oftmals die zulässigen Temperaturen für die verwendeten Messgeräte an der Messstelle überschritten und eine zuverlässige Bestimmung des Flüssigkeitsniveaus ist nicht gegeben.

Weiteren Stand der Technik bilden EP 3 885 715 A1, WO 2017 098 346 A1. US 6 125 642 A und US 0 302 338 A**.**

Hier setzt die vorliegende Erfindung an.

Die vorliegende Erfindung widmet sich der Aufgabe, eine Vorrichtung zum Messen eines Flüssigkeitsniveaus eines heißen Mediums in einem Behälter vorzuschlagen, die in zweckmäßiger Weise die aus dem Stand der Technik bekannten Nachteile beseitigt. Die Vorrichtung soll eine zuverlässige Niveaumessung auch bei hohen Temperaturen des Mediums und bei hohen Drücken ermöglichen und darüber hinaus unanfällig gegenüber Wellenbewegungen des Mediums in dem Behälter sein.

Diese Aufgaben werden durch eine Vorrichtung zum Messen eines Flüssigkeitsniveaus eines heißen Mediums in einem Behälter mit den Merkmalen des Patentanspruchs 1 und durch einen Behälter mit einer solchen Vorrichtung mit den Merkmalen des Patentanspruchs 13 und eine Kältemittelmaschine oder Kältekreislauf mit einer solchen Vorrichtung mit den Merkmalen des Patentanspruchs 14 gelöst.

Weitere vorteilhafte Ausgestaltungen der vorliegenden Erfindung werden in den Unteransprüchen angegeben.

Die erfindungsgemäße Vorrichtung zum Messen eines Flüssigkeitsniveaus eines Mediums, insbesondere ein Schmiermedium, vorzugswese Öl, mit einer hohen Temperatur in einem Behälter, insbesondere einem Ölsumpf einer Kältemittelmaschine, weist eine Messeinheit mit einer Messkammer und einem Flüssigkeitsniveau-Messgerät zum Bestimmen des Flüssigkeitsniveaus in der Messkammer und eine Verbindungseinrichtung zum beabstandeten Verbinden der Messeinheit mit dem Behälter und zum Fluidaustausch zwischen dem Behälter und der Messkammer auf. Darüber hinaus weist die Verbindungseinrichtung einen Anschlussadapter mit Mitteln zum Befestigen an dem Behälter und einen Verbindungsadapter mit Mitteln zum Verbinden mit der Messeinheit auf, wobei der Anschlussadapter und der Verbindungsadapter durch mindestens zwei Verbindungsleitungen entlang einer Achse beabstandet angeordnet sind.

Die vorliegende Erfindung beruht auf der Idee, die Messeinheit über einer Verbindungseinrichtung beabstandet zu dem Behälter mit dem heißen Medium anzuordnen. Mindestens eine der mindestens zwei Verbindungsleitungen ist konfiguriert, den Flüssigkeitsstand in der Messkammer anzuheben bzw. abzusenken und mindestens eine andere der mindestens zwei Verbindungsleitungen ist konfiguriert, die Messkammer zu ent- bzw. belüften. Eine Kühlung bzw. Temperaturabsenkung des Mediums erfolgt über eine Länge der Verbindungsleitungen, wobei in Abhängigkeit von dem Anwendungsfall die Länge der Verbindungsleitungen zum Kühlen des Mediums dimensioniert werden kann.

Eine bevorzugte Weiterbildung der vorliegenden Erfindung sieht vor, dass die mindestens zwei Verbindungsleitungen konvektionskühlbar sind. Die mindestens zwei Verbindungsleitungen können zu diesem Zweck gebündelt und/oder vereinzelt sein. Bevorzugt sind die mindestens zwei Verbindungsleitungen horizontal und/oder freistehend ausgerichtet, wodurch, insbesondere bei einem kreisrunden Querschnitt, eine besonders gute Kühlung durch Konvektion erreicht werden kann. Die jeweilige Verbindungsleitung kann entweder vereinzelt oder die mindestens zwei Verbindungsleitungen können gebündelt sein. Auch ist es im Rahmen dieser Erfindung denkbar, dass die Verbindungsleitungen eine Oberflächenvergrößerung, beispielsweise durch Kühlrippen, -finnen o.Ä., aufweisen.

Darüber hinaus hat es sich als vorteilhaft erwiesen, wenn mindestens vier, vorzugsweise fünf, noch weiter bevorzugt sechs oder mehr Verbindungsleitungen vorgesehen sind, und wenn weiter bevorzugt die Verbindungsleitungen parallel und/oder symmetrisch zu der Achse angeordnet sind. Insbesondere ist es vorteilhaft, mehr als zwei Verbindungsleitungen vorzusehen. Der Anschlussadapter muss zum Befestigen an dem Behälter nicht exakt ausgerichtet werden, sondern kann nach dem Befestigen, insbesondere durch ein- oder aufschrauben, in einer beliebigen Lage verbleiben. Durch die Mehrzahl an Verbindungsleitungen kann gewährleistet werden, dass stets über mindestens eine der Verbindungsleitungen der Flüssigkeitsstand in der Messkammer angehoben bzw. abgesenkt werden kann und mindestens eine andere der Verbindungsleitungen die Messkammer ausreichend ent- bzw. belüften kann.

Nach Maßgabe einer bevorzugten Weiterbildung der vorliegenden Erfindung ist zwischen den mindestens zwei Verbindungsleitungen und der Messkammer eine Sammelkammer angeordnet, die die mindestens zwei Verbindungsleitungen miteinander verbindet. Die Sammelkammer ist fluidisch der Messkammer und den mindestens zwei Verbindungsleitungen zwischengeschaltet und steht in Kommunikation mit der Messkammer. Über die Sammelkammer wird der Flüssigkeitsstand in der Messkammer angehoben bzw. abgesenkt sowie die Messkammer ent- bzw. belüftet. Die Sammelkammer wirkt als Dämpfer zwischen dem Behälter bzw. den mindestens zwei Verbindungsleitungen und der Messkammer und verhindert, dass Wellenbewegungen des Mediums in dem Behälter auf die Messkammer in der Messeinheit übertragen werden.

Eine bevorzugte Weiterbildung der vorliegenden Erfindung sieht vor, dass die Sammelkammer durch einen sich um die Längsachse erstreckenden Sammelkanal gebildet ist. Die Sammelkammer bzw. der die Sammelkammer bildende Sammelkanal kann oval-, ring- oder polygonförmig sein und kann sich ferner vollständig oder nur teilweise um die Längsachse erstrecken. Bevorzugt verbindet die Sammelkammer alle der mindestens zwei Verbindungsleitungen miteinander.

Ferner kann es nach Maßgabe der vorliegenden Erfindung vorteilhaft sein, wenn die Sammelkammer durch den Verbindungsadapter und/oder die Messeinheit gebildet bzw. umschlossen ist. Bevorzugt kann der Verbindungadapter auf der der Messeinheit zugewandten Seite und/oder die Messeinheit auf der dem Verbindungadapter zugewandten Seite eine die Sammelkammer formende Ausnehmung aufweisen, in die die mindestens zwei Verbindungsleitungen münden bzw. münden können. Die Sammelkammer kann durch die korrespondierende Ausgestaltung des Verbindungsadapters und der Messeinheit verschlossen werden und kann weiterhin gegenüber der Umgebung mittels einer oder mehreren Dichtungen verschlossen werden. Die Sammelkammer lässt sich auf diese Weise einfach und kostengünstig herstellen.

Eine Weiterbildung der vorliegenden Erfindung sieht vor, dass die Messkammer über einen Einlass und einen Auslass mit der Sammelkammer verbunden ist. Der Einlass und/oder der Auslass der Messkammer weisen bzw. weist ferner einen durchströmbaren Querschnitt auf. Der durchströmbare Querschnitt kann kleiner sein als ein Querschnitt mindestens einer der mindestens zwei Verbindungsleitungen. Vorzugsweise kann der durchströmbare Querschnitt des Einlasses und/oder des Auslasses kleiner sein als die Summe der Querschnitte der mindestens zwei Verbindungsleitungen. Durch den geringeren durchströmbaren Querschnitt wird die Dämpfung der Sammelkammer vergrößert. Es wird angemerkt, dass der durchströmbare Querschnitt des Einlasses und/oder des Auslasses nicht zu klein gewählt werden sollte, um eine zu große Trägheit der Messvorrichtung zu vermeiden.

Ferner kann es vorteilhaft sein, wenn ein Verhältnis der Länge und des Innendurchmessers - vorzugsweise jeder - der mindestens zwei Verbindungsleitungen groß gewählt ist. Insbesondere ist es bevorzugt, wenn das "Länge-zu-Innendurchmesser-Verhältnis" größer 5, weiter bevorzugt größer 10, noch weiter bevorzugt größer 20 oder mehr ist. Große "Länge-zu-Innendurchmesser-Verhältnisse" führen zu einer Dämpfung von Wellenbewegungen des Mediums.

Darüber hinaus hat es sich vorteilhaft erwiesen, wenn die Messeinheit um die Achse gegenüber dem Verbindungsadapter drehbar ist. Zwischen der Messeinheit und dem Verbindungsadapter ist bevorzugt ein Drehgelenk gebildet, welches ermöglicht, die Messeinheit - unabhängig von der Ausrichtung der Verbindungseinrichtung an dem Behälter - zur Ausrichtung in der Vertikalen um die Achse zu drehen. Das Drehgelenk kann aus zusammenwirkenden Planflächen an dem Verbindungsadapter und an der Messeinheit gebildet werden. Insbesondere kann es vorteilhaft sein, wenn darüber hinaus Feststellmittel vorgesehen sind, durch die die Messeinheit gegenüber dem Verbindungadapter festgelegt werden kann, um ein unerwünschtes Verdrehen der Messeinheit zu verhindern. Bevorzugt sind die Feststellmittel zugleich die Montagemittel, durch die die Messeinheit an der Verbindungseinrichtung befestigt werden kann.

Nach Maßgabe einer weiteren vorteilhaften Ausführungsform kann die Vorrichtung zum Messen eine Öllanze aufweisen. Die Öllanze ermöglicht eine Zuführung von Öl in den Behälter, vorbei bevorzugt die Zuführung durch die Vorrichtung erfolgt. Die Vorrichtung kann ein Füllstandmanagementsystem sein und sowohl das Flüssigkeitsniveau überwachen als auch ein Nachfüllen des Mediums in den Behälter veranlassen. Zu diesem Zweck kann die Vorrichtung eine entsprechende Steuerung und/oder Stellglieder **z.B.** ein Ventil aufweisen. Bevorzugt ist die Öllanze parallel zu der Achse zwischen den mindestens zwei Verbindungsleitungen orientiert. Insbesondere ist es bevorzugt, wenn die Öllanze koaxial zu der Achse angeordnet ist und weiter bevorzugt in der Achse durch den Verbindungsadapter hindurch ragt und noch weiter bevorzugt über das freie Ende des Verbindungsadapters absteht.

Nach Maßgabe einer Weiterbildung der vorliegenden Erfindung ist das Flüssigkeitsniveau-Messgerät schwimmerbasiert. Alternativ oder ergänzend kann das Flüssigkeitsniveau-Messgerät eine optische, akustische, magnetische Sensorik, beispielsweise mittels eines Hall-Sensors, zur Bestimmung des Flüssigkeitsniveaus in der Messkammer aufweisen.

Weiterhin kann es vorteilhaft sein, wenn die Messkammer ein Sichtfenster bzw. ein Schauglas aufweist, durch das das Flüssigkeitsniveau in der Messkammer optisch wahrnehmbar ist.

Ein weiterer Aspekt der vorliegenden Erfindung betrifft einen Behälter mit einer zuvor beschriebenen Vorrichtung zum Messen eines Flüssigkeitsniveaus. Der Behälter ist vorzugsweise ein druckbelastbarer Behälter, der geeignet ist, das Medium mit einer hohen Temperatur aufzunehmen.

Ein weiterer Aspekt der vorliegenden Erfindung betrifft einen Kältekreislauf oder eine Kältemittelmaschine, insbesondere einen Kältemittelverdichter, oder einen Ölabscheider eines Kältekreislaufes mit einer zuvor beschriebenen Vorrichtung zum Messen eines Flüssigkeitsniveaus eines Mediums in einem Behälter. Bevorzugt wird der Behälter durch einen Ölsumpf der Kältemittelmaschine gebildet.

Nachfolgend wird unter Bezugnahme auf die begleitenden Zeichnungen ein Ausführungsbeispiel einer erfindungsgemäßen Vorrichtung zum Messen eines Flüssigkeitsniveaus eines Mediums im Detail beschrieben. Es zeigen:
- Figur 1: einen schematischen und stark vereinfachten Kältekreislauf mit zwei Wärmeübertragern, einer Kältemittelmaschine, einem Ölabscheider mit einer Vorrichtung zum Messen eines Flüssigkeitsniveaus und einem Expansionsorgan,
- Figur 2: eine vergrößerte Darstellung des Ölabscheiders mit der Vorrichtung zum Messen eines Flüssigkeitsniveaus,
- Figur 3: eine vergrößerte Darstellung des Verdichters gemäß Figur 1 mit der Vorrichtung zum Messen eines Flüssigkeitsniveaus,
- Figur 4: eine perspektivische Darstellung der Vorrichtung zum Messen eines Flüssigkeitsniveaus gemäß den Figuren 1 bis 3,
- Figur 5: eine Schnittdarstellung der an dem Verdichter oder dem Ölabscheider montierten Vorrichtung zum Messen eines Flüssigkeitsniveaus gemäß den Figuren 1 bis 3,
- Figur 6: eine Schnittdarstellung der an dem Verdichter oder dem Ölabscheider montierten Vorrichtung zum Messen eines Flüssigkeitsniveaus gemäß den Figuren 1 bis 3, und
- Figur 7: eine Weiterbildung der Vorrichtung zum Messen eines Flüssigkeitsniveaus mit einer Öllanze.

Gleiche oder funktional gleiche Bauteile werden mit den gleichen Bezugszeichen gekennzeichnet. Darüber hinaus sind in den Figuren nicht alle gleichen oder funktional gleichen Bauteile mit einer Bezugsziffer versehen.

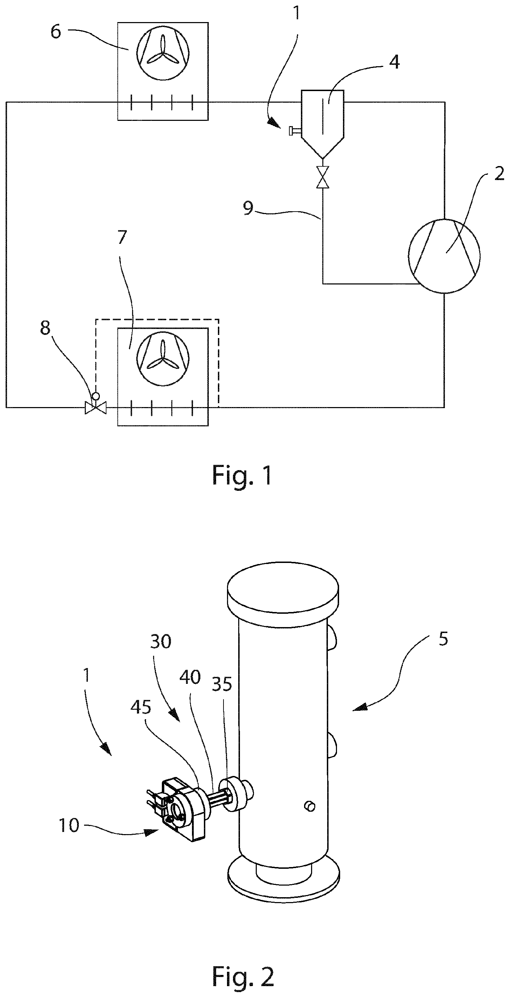

Figur 1 zeigt einen Kältekreislauf 3 eines Kältemittels, aufweisend einen als Kältemittelmaschine 2 ausgebildeten Kältemittelverdichter, einen Ölabscheider 4 mit einer Vorrichtung 1 zum Messen eines Flüssigkeitsniveaus eines Medium mit einer hohen Temperatur, zwei Wärmeübertrager 6, 7 und ein Expansionsorgan 8. Ein von der Kältemittelmaschine 2, insbesondere Kältemittelverdichter, kommendes Kältemittel wird zunächst zu dem Ölabscheider 4 geleitet, wobei der Ölabscheider 4 zur Vermeidung von Ölwurf das Medium, insbesondere Öl, aus dem Kältemittel abscheidet.

Das Medium kann, wie in Figur 1 angedeutet, über eine Leitung 9 zu der Kältemittelmaschine 2 zugeführt werden. Der Ölabscheider 4 gibt das Kältemittel mit einem verringerten Ölwurf vorzugweise über einen Kältemittelauslass ab und das Kältemittel wird von dort zu einem ersten Wärmeübertrager 6 geleitet und durch eine Wärmeabfuhr gekühlt und/oder verflüssigt. Anschließend wird das Kältemittel über ein Expansionsorgan 8 zu dem zweiten Wärmeübertrager 7 geleitet, wobei in dem zweiten Wärmeübertrager 7 die Wärme von dem Kältemittel aufgenommen werden kann. Das Kältemittel des Kältekreislaufes 3 ist bevorzugt CO2.

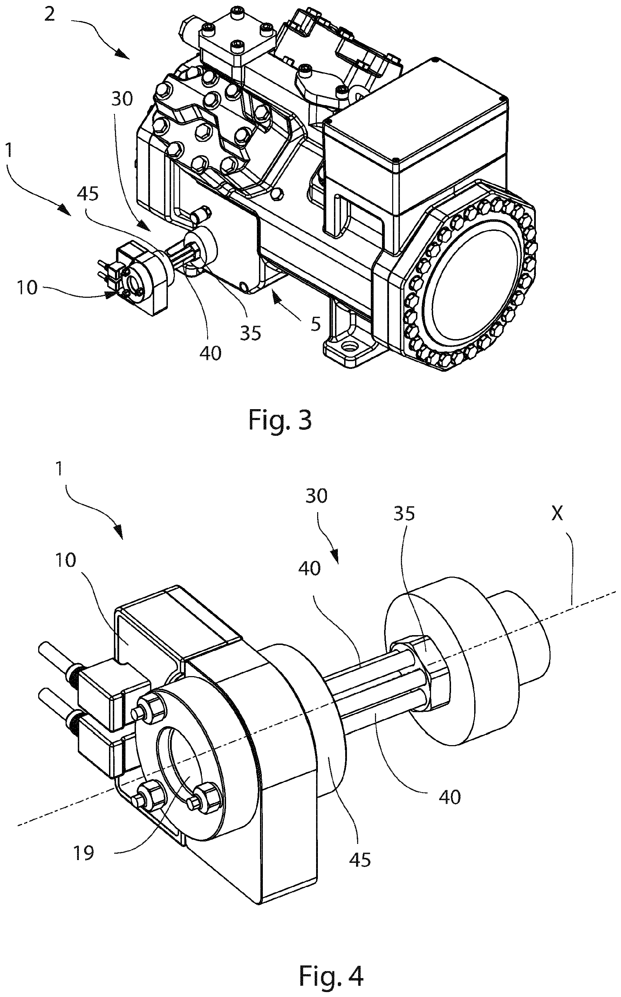

Die Figuren 2 und 3 zeigen eine exemplarische Anwendung der Vorrichtung 1 zum Messen eines Flüssigkeitsniveaus eines Mediums mit einer hohen Temperatur in einem Behälter 5. In dem Beispiel gemäß Figur 2 wird der Behälter 5 - analog zur Figur 1 - durch den Ölabscheider 4 gebildet. In Figur 3 wird der Behälter 5 durch die Kältemittelmaschine 2 gebildet, wobei der Behälter 5 beispielsweise ein Ölsumpf der Kältemittelmaschine 2 sein kann.

Die Figuren 4-7 zeigen im Detail die Vorrichtung 1 zum Messen eines Flüssigkeitsniveaus eines Mediums mit einer hohen Temperatur gemäß den Figuren 2 und 3, wobei ersichtlich ist, dass die Vorrichtung 1 eine Messeinheit 10 und eine Verbindungseinrichtung 30 umfasst.

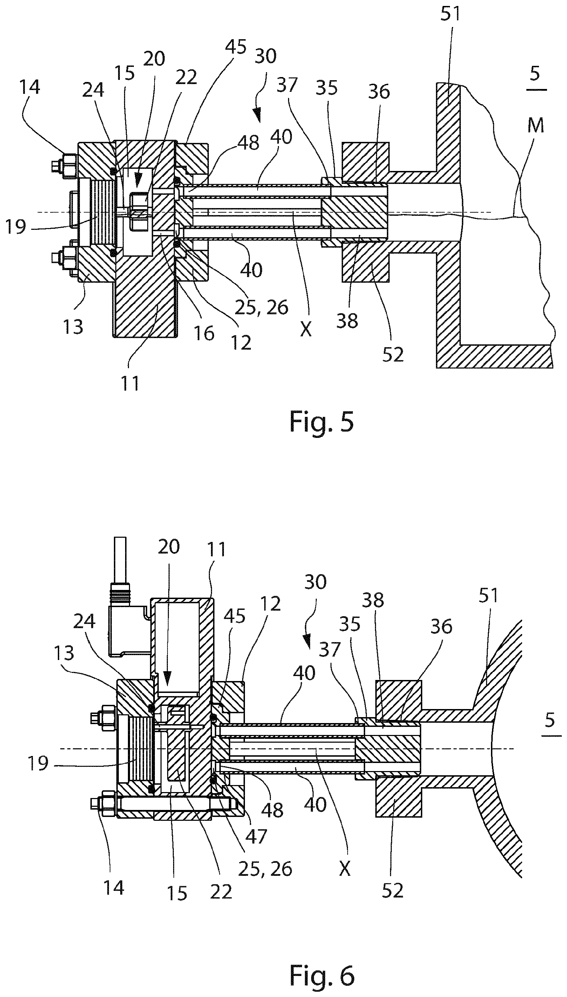

Die Messeinheit 10 umfasst, wie den Figuren 5 bis 7 entnommen werden kann, eine Messkammer 15 und ein Messgerät 20, welches konfiguriert ist, das Flüssigkeitsniveau in der Messkammer 15 zu bestimmen. Das Messgerät 20 kann mit einem oder mehreren Messprinzipien das Flüssigkeitsniveau in der Messkammer 15 bestimmen. Mögliche Messprinzipien sind beispielsweise und nicht abschließend akustische, beispielsweise mittels Ultraschall, optische, insbesondere über eine Laufzeitmessung eines Lichtstrahls, oder andere Messtechniken, beispielsweise mittels eines Schwimmers. An dieser Stelle wird angemerkt, dass im Weiteren das Messgerät 20 als ein schwimmerbasiertes Messgerät 20 beschrieben wird, jedoch die Ausführungsbeispiele nicht auf das schwimmerbasierte Messgerät 20 beschränkt sind.

Das Messgerät 20 kann einen Schwimmer 22 aufweisen, der um eine Schwimmerachse 24 drehbar in der Messkammer 15 angeordnet ist. Der Schwimmer 22 kann einen (nicht dargestellten) Magneten umfassen, wobei ein (nicht dargestellter) elektronischer Sensor das magnetische Feld des Magneten erfassen kann. Das Flüssigkeitsniveau des Mediums in der Messkammer 15 gibt die Lage des Schwimmers 22 in der Schwimmerachse 24 vor, wobei der elektronische Sensor die Lage des Schwimmers 22 in der Schwimmerachse 24 anhand des magnetischen Feldes erfasst und eine Bestimmung des Flüssigkeitsniveaus ermöglicht.

Die Messeinheit 10 kann ein als Ganzes bezeichnetes Gehäuse aus mehreren Gehäuseteilen 11, 12, 13 umfassen, wobei die Gehäuseteile 11, 12, 13 einerseits die Messkammer 15 umschließen können und andererseits der Befestigung der Messeinheit 10 an der Verbindungseinrichtung 30 dienen können.

Die Verbindungseinrichtung 30 umfasst gemäß Figur 4 einen Anschlussadapter 35, mindestens zwei Verbindungsleitungen 40 und einen Verbindungsadapter 45. Die Verbindungseinrichtung 30 dient der beabstandeten Anordnung der Messeinheit 10 an dem Behälter 5 in einer Achse X und überträgt das Medium von dem Behälter 5 in die Messkammer 15 und in Abhängigkeit eines Füllstandes M des Mediums - siehe Figur 5 - in dem Behälter 5 wird das Flüssigkeitsniveau in der Messkammer 15 angehoben oder abgesenkt.

Gemäß den in den Figuren 2 bis 7 dargestellten Ausführungsbeispielen weist die Verbindungseinrichtung 30 sechs Verbindungsleitungen 40 auf, welche parallel zu der Achse X und symmetrisch um die Achse X angeordnet sein können. An dieser Stelle wird angemerkt, dass die Anzahl der Verbindungsleitungen 40 beliebig gewählt werden kann, jedoch mindestens zwei Verbindungsleitungen 40 vorzusehen sind, die derart angeordnet werden können, dass eine der mindestens zwei Verbindungsleitungen 40 das Flüssigkeitsniveau in der Messkammer 15 anheben bzw. absenken kann und die zweite der mindestens zwei Verbindungsleitungen 40 derart angeordnet ist, dass die Messkammer 15 belüftet bzw. entlüftet werden kann. Bei mehr als zwei Verbindungsleitungen 40 kann mehr als eine der mehr als zwei Verbindungsleitungen 40 für das Anheben und/oder das Absenken des Flüssigkeitsniveaus in der Messkammer 15 genutzt werden. Je nach Füllstand in der Messkammer 15 kann jedoch diese Anzahl variieren.

Die Verbindungseinrichtung 30 ist entlang der Achse X angeordnet, wobei auf gegenüberliegenden Seiten der Achse X der Anschlussadapter 35 und der Verbindungsadapter 45 angeordnet sind. Die Achse X ist bevorzugt horizontal ausgerichtet. Mit anderen Worten ist die Achse X vorzugsweise senkrecht zu dem Kraftvektor der Schwerkraft orientiert.

Der Anschlussadapter 35 ist auf der dem Behälter 5 zugewandten Seite der Verbindungseinrichtung 30 angeordnet und ist eingerichtet, die Vorrichtung 1 mit dem Behälter 5 zu verbinden. Der Anschlussadapter 35 kann vorzugsweise als ein zylindrisch ausgebildeter Stopfen ausgebildet sein und ein Verbindungsmittel 36 aufweisen, dass eine druckdichte Verbindung mit dem Behälter 5 bewerkstelligen kann. In dem dargestellten Ausführungsbeispiel wird das Verbindungsmittel 36 durch ein Gewinde gebildet, welches in einen korrespondierenden Anschlussstutzen 52 an dem Behälter 5 eingeschraubt oder schraubverbunden werden kann.

Ferner weist der Anschlussadapter 35 mehrere Durchgangsöffnungen 38 auf, welche auf der von dem Behälter 5 abgewandten Seite Aufnahmen 37 aufweisen können, in die jeweils eine Verbindungsleitung 40 eingesetzt und druckdicht verbunden ist.

Die Verbindungsleitungen 40 sind bevorzugt dünnwandige Rohre aus einem wärmeleitfähigen, bevorzugt metallischen, Werkstoff und weisen eine nicht in den Figuren gekennzeichnete Länge L und einen nicht in den Figuren gekennzeichneten Innendurchmesser d auf, wobei das Verhältnis L/d ≥ 10, vorzugsweise ≥ 20, sein sollte, damit Wellenbewegungen aus dem Behälter in Richtung der Messkammer 15 gedämpft werden. Die jeweilige Verbindungsleitung 40 ist vorzugsweise freistehend und noch weiter bevorzugt horizontal ausgerichtet, um besonders gut konvektionskühlbar zu sein. Die Länge L der Verbindungsleitungen 40 kann je nach Kühlungsbedarf dimensioniert werden.

Der Verbindungsadapter 45 weist für jede Verbindungsleitung 40 eine Durchgangsöffnung 48 auf. Auf der dem Anschlussadapter 35 zugewandten Seite können Aufnahmen 47 in der jeweiligen Durchbrechung 48 ausgebildet sein, in der jeweils eine Verbindungsleitung 40 druckdicht angeordnet bzw. verbunden ist.

Gemäß nicht dargestellter Weiterbildungen kann die Verbindungseinrichtung 30 ein- oder mehrstückig ausgebildet sein. Beispielsweise können der Anschlussadapter 35, die Verbindungsleitungen 40 und/oder der Verbindungsadapter 45 als integralbauteil, beispielsweise durch 3D-Druck hergestellt, ausgebildet sein.

Die Messeinheit 10 ist gegenüber der Verbindungseinrichtung 30 um die Achse X drehbar, wodurch sichergestellt werden kann, dass die Messkammer 15 unabhängig von der Einbausituation des Anschlussadapters 35 an dem Behälter 5 in die Vertikale ausgerichtet angeordnet werden kann. Der Einlass 16, der Auslass 17 und die Achse x können in einer gemeinsamen Ebene vorzugsweise mit dem Schwerkraftvektor liegen. Die Drehbarkeit der Messeinheit 10 gegenüber der Verbindungseinrichtung 30 um die Achse X kann durch ein Drehgelenk realisiert werden, welches aus zusammenwirkenden Planflächen der Messeinheit 10 und des Verbindungsadapters 45 gebildet werden kann.

Weiterhin ist aus den Figuren 5 und 6 ersichtlich, dass zwischen den Verbindungsleitungen 40 und der Messkammer 15 eine Sammelkammer 25 angeordnet ist, welche die mindestens zwei Verbindungsleitungen 40 miteinander verbindet. Die Sammelkammer 25 ist fluidisch zwischen den Verbindungsleitungen 40 und der Messkammer 15 geschaltet.

Die Sammelkammer 25 kann als ein um die Achse X angeordneter Sammelkanal 26 ausgebildet sein, der bevorzugt vollständig und noch weiter bevorzugt ringförmig um die Achse X herum und zu dieser koaxial angeordnet sein kann. Die Sammelkammer 25 ist über einen Einlass 16 und einen Auslass 17 mit der Messkammer 15 verbunden, wobei der Einlass 16 und der Auslass 17 auf diametralen Seiten der Achse X in die Sammelkammer 25 münden. Der Sammelkanal 26 kann bevorzugt beabstandet um die Achse X angeordnet sein.

Die Sammelkammer 25 kann nach Art eines Einstiches auf einer der korrespondierenden Planflächen der Messeinheit 10 und/oder des Verbindungsadapters 45 gebildet sein, und wird bevorzugt durch die Messeinheit 10 bzw. das Gehäuseteil 11 der Messeinheit 10 und von dem Verbindungsadapter 45 umschlossen. Weiterhin können, wie in den Figuren 5-7 ersichtlich ist, im Bereich der Planflächen Dichtungen vorgesehen sein, um die Verbindung zwischen der Verbindungseinrichtung 30 und der Messeinheit 10 druckdicht zu gestalten.

Der Verbindungadapter 45 kann durch das flanschförmige Gehäuseteil 12 gegen das Gehäuseteil 11 mittels Verbindungsmitteln gespannt gehalten werden, wodurch die Messeinheit 10 an der Verbindungseinrichtung 30 befestigt werden kann. Durch die Befestigung kann ebenfalls das gebildete Drehgelenk zwischen der Verbindungseinrichtung 30 und der Messeinheit 10 festgelegt werden.

Weiterhin kann eine optische Zugänglichkeit der Messkammer 15 durch ein Sichtfenster 19 bzw. Schauglas gebildet werden, wodurch das Flüssigkeitsniveau des Mediums in der Messkammer 15 zu Kontrollzwecken durch den Benutzer ersichtlich sein kann.

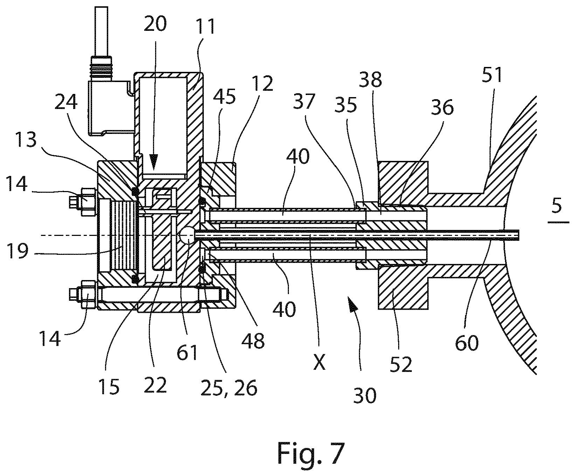

Figur 7 zeigt eine Weiterbildung der Vorrichtung 1 gemäß der Figuren 1-6, wobei zusätzlich zu den bisher beschriebenen Ausführungsbeispielen die Vorrichtung 1 eine Lanze 60 aufweist, durch die Medium durch die Vorrichtung 1 in den Behälter 5 nachgefüllt werden kann. Die Vorrichtung 1 kann somit ein Füllstandmanagementsystem sein und einerseits ein Flüssigkeitsniveau in dem Behälter 5 überwachen und andererseits beim Unterschreiten eines vorgegebenen Flüssigkeitsniveaus ein Nachfüllen des Mediums in den Behälter 5 veranlassen. Zu diesem Zweck kann die Vorrichtung 1 entsprechende Stellglieder aufweisen, durch die das Medium kontrolliert durch die Lanze 60 in den Behälter 5 eingeführt werden kann.

Wie der detaillierten Darstellung gemäß Figur 7 entnommen werden kann, ragt die Lanze 60 entlang der Achse X von dem Anschlussadapter 35 freistehend in den Behälter 5. Dadurch kann eine Beeinflussung der Messgenauigkeit des Messgerätes 20 in der Messkammer 15 beim Nachführen von Medium durch die Vorrichtung 1 ausgeschlossen werden.

### Bezugszeichenliste

- 1: Vorrichtung
- 2: Kältemittelverdichter
- 3: Kältekreislauf
- 4: Ölabscheider
- 5: Behälter
- 6: Wärmeübertrager
- 7: Expansionsorgan
- 8: Leitung

- 10: Messeinheit
- 11: Gehäuseteil
- 12: Gehäuseteil
- 13: Gehäuseteil
- 14: Befestigungsmittel
- 15: Messkammer
- 16: Einlass
- 17: Auslass
- 19: Schauglas
- 20: Messgerät
- 22: Schwimmer
- 25: Sammelkammer
- 26: Sammelkanal
- 30: Verbindungseinrichtung
- 35: Anschlussadapter
- 36: Befestigungsmittel
- 37: Ausnehmung
- 38: Durchgangsöffnung
- 40: Verbindungsleitungen
- 45: Verbindungsadapter
- 48: Durchgangsöffnung
- 51: Wandung
- 52: Anschlussstutzen
- 60: Lanze
- X: Achse

## Patentansprüche

1. Vorrichtung (1) zum Messen eines Flüssigkeitsniveaus eines Medium mit einer hohen Temperatur in einem Behälter (5), aufweisend,
- eine Messeinheit (10) mit einer Messkammer (15) und einem Messgerät (20) zum Bestimmen des Flüssigkeitsniveaus in der Messkammer (15), und
- eine Verbindungseinrichtung (30) zum beabstandeten Verbinden der Messeinheit (10) mit dem Behälter (5) und zum Übertragen des Mediums von dem Behälter (5) in die Messkammer (15), **dadurch gekennzeichnet, dass** die Verbindungseinrichtung (30) einen Anschlussadapter (35) mit Mitteln zum Befestigen an dem Behälter (5) und einen Verbindungsadapter (45) mit Mitteln zum Verbinden mit der Messeinheit (10) aufweist,
- wobei der Anschlussadapter (35) und Verbindungsadapter (45) durch mindestens zwei Verbindungsleitungen (40) entlang einer Achse (X) beabstandet angeordnet sind.

2. Vorrichtung (1) nach Anspruch 1,
**dadurch gekennzeichnet, dass**
die mindestens zwei Verbindungsleitungen (40) konvektionskühlbar sind.

3. Vorrichtung (1) nach Anspruch 1 oder 2,
**dadurch gekennzeichnet, dass** mindestens vier, sechs oder mehr Verbindungsleitungen (40) vorgesehen sind.

4. Vorrichtung (1) nach einem der vorgenannten Ansprüche, **dadurch gekennzeichnet, dass**
die mindestens zwei Verbindungsleitungen (40) parallel und symmetrisch zu der Achse angeordnet sind.

5. Vorrichtung (1) nach einem der vorgenannten Ansprüche, **dadurch gekennzeichnet, dass** zwischen den mindestens zwei Verbindungsleitungen (40) und der Messkammer (15) eine Sammelkammer (25) angeordnet ist, die die mindestens zwei Verbindungsleitungen (40) miteinander verbindet.

6. Vorrichtung (1) nach Anspruch 5,
**dadurch gekennzeichnet, dass**
die Sammelkammer (25), die durch einen sich um die Achse (X) erstreckenden Sammelkanal (26) gebildet ist, ringförmig ist.

7. Vorrichtung (1) nach Anspruch 5 oder 6,
**dadurch gekennzeichnet, dass**
die Sammelkammer (25) durch Verbindungsadapter (45) und eine Messeinheit (10) umschlossen ist.

8. Vorrichtung (1) nach einem der Ansprüche 5 bis 7,
**dadurch gekennzeichnet, dass**
die Messkammer (15) über einen Einlass (16) und einen Auslass (17) mit der Sammelkammer (25) verbunden ist.

9. Vorrichtung (1) nach einem der vorgenannten Ansprüche, **dadurch gekennzeichnet, dass**
die Messeinheit (10) um die Achse (X) gegenüber dem Verbindungsadapter (45) drehbar ist.

10. Vorrichtung (1) nach einem der vorgenannten Ansprüche, **dadurch gekennzeichnet, dass**
das Messgerät (20) schwimmerbasiert ist.

11. Vorrichtung (1) nach einem der vorgenannten Ansprüche, **dadurch gekennzeichnet, dass**
die Messkammer (15) ein Sichtfenster (19) aufweist.

12. Vorrichtung (1) nach einem der vorgenannten Ansprüche, **dadurch gekennzeichnet, dass**
der Anschlussadapter (35) mittels einer Schraubverbindung am Behälter (5) befestigbar ist.

13. Behälter (5) für ein Medium mit einer hohen Temperatur mit einer Vorrichtung (1) nach einem der vorgenannten Ansprüche.

14. Kältemittelmaschine (2) oder Kältekreislauf (3), aufweisend eine Vorrichtung (1) nach einem der vorgenannten Ansprüche.

## Claims

1. A device (1) for measuring a liquid level of a medium at a high temperature in a container (5), having
- a measuring unit (10) with a measurement chamber (15) and a measuring instrument (20) for determining the liquid level in the measurement chamber (15), and
- a connecting feature (30) for connecting said measuring unit (10) to said container (5) at a distance and for transferring the medium from said container (5) into said measurement chamber (15),
**characterized in that**
- said connecting feature (30) has an attachment adapter (35) with means for fastening to said container (5) and a connection adapter (45) with means for connecting to said measuring unit (10),
- wherein said attachment adapter (35) and said connection adapter (45) are arranged at a distance along an axis (X) by at least two connecting lines (40).

2. The device (1) according to Claim 1,
**characterized in that**
the at least two connecting lines (40) can be cooled by convection.

3. The device (1) according to Claim 1 or 2,
**characterized in that**
at least four, six or more connecting lines (40) are provided.

4. The device (1) according to any one of the preceding claims,
**characterized in that**
said at least two connecting lines (40) are arranged parallel and symmetrically to the axis.

5. The device (1) according to any one of the preceding claims,
**characterized in that**
a collection chamber (25) is arranged between said at least two connecting lines (40) and said measurement chamber (15) and connects said at least two connecting lines (40) to one another.

6. The device (1) according to Claim 5,
**characterized in that**
the collection chamber (25), which is formed by a collection channel (26) extending around the axis (X), has annular shape.

7. The device (1) according to Claim 5 or 6,
**characterized in that**
the collection chamber (25) is enclosed by connection adapters (45) and a measuring unit (10).

8. The device (1) according to any one of Claims 5 to 7, **characterized in that**
said measurement chamber (15) is connected to said collection chamber (25) via an inlet (16) and an outlet (17).

9. The device (1) according to any one of the preceding claims,
**characterized in that**
said measuring unit (10) can be rotated about the axis (X) relative to said connection adapter (45).

10. The device (1) according to any one of the preceding claims,
**characterized in that**
said measuring instrument (20) is float-based.

11. The device (1) according to any one of the preceding claims,
**characterized in that**
the measurement chamber (15) has a viewing window (19).

12. The device (1) according to any one of the preceding claims,
**characterized in that**
said attachment adapter (35) can be fastened to said container (5) by means of a screw connection.

13. A container (5) for a medium at a high temperature with a device (1) according to any one of the preceding claims.

14. A refrigerating machine (2) or refrigeration cycle (3), having a device (1) according to any one of the preceding claims.

## Revendications

1. Dispositif (1) de mesure d'un niveau de liquide d'un milieu ayant une température élevée dans un récipient (5), comportant
- une unité (10) de mesure ayant une chambre (15) de mesure et un appareil (20) de mesure pour la détermination du niveau du liquide dans la chambre (15) de mesure, et
- un dispositif (30) de liaison pour la liaison distanciée de l'unité (10) de mesure au récipient (5) et pour la transmission du milieu du récipient (5) à la chambre (15) de mesure,
**caractérisé en ce que**
le dispositif (30) de liaison a un adaptateur (35) de connexion ayant des moyens de fixation au récipient (5) et un adaptateur (45) de liaison ayant des moyens de liaison à l'unité (10) de mesure,
- dans lequel l'adaptateur (35) de connexion et l'adaptateur (45) de liaison sont disposés à distance suivant un axe (X) par au moins deux conduits (40) de liaison.

2. Dispositif (1) suivant la revendication 1,
**caractérisé en ce que**
les au moins deux conduits (40) de liaison peuvent être refroidis par convection.

3. Dispositif (1) suivant la revendication 1 ou 2, **caractérisé en ce qu'**
il est prévu au moins quatre, six ou plus conduits (40) de liaison.

4. Dispositif (1) suivant l'une des revendications précédentes, **caractérisé en ce que**
les au moins deux conduits (40) de liaison sont disposés parallèlement et symétriquement par rapport à l'axe.

5. Dispositif (1) suivant l'une des revendications précédentes, **caractérisé en ce qu'**
entre les au moins deux conduits (40) de liaison et la chambre (15) de mesure est disposée une chambre (25) collectrice, qui relie entre eux les au moins deux conduits (40) de liaison.

6. Dispositif (1) suivant la revendication 5,
**caractérisé en ce que**
la chambre (25) collectrice, qui est formée par un conduit (26) collecteur s'étendant autour de l'axe (X), est de forme annulaire.

7. Dispositif (1) suivant la revendication 5 ou 6,
**caractérisé en ce que**
la chambre (25) collectrice est entourée de l'adaptateur (45) de liaison et d'une unité (10) de mesure.

8. Dispositif (1) suivant l'une des revendications 5 à 7, **caractérisé en ce que**
la chambre (15) de mesure est reliée à la chambre (25) collectrice par une entrée (16) et une sortie (17).

9. Dispositif (1) suivant l'une des revendications précédentes, **caractérisé en ce que**
l'unité (10) de mesure peut tourner autour de l'axe (X) par rapport à l'adaptateur (45) de liaison.

10. Dispositif (1) suivant l'une des revendications précédentes, **caractérisé en ce que**
l'appareil (20) de mesure est fondé sur un flotteur.

11. Dispositif (1) suivant l'une des revendications précédentes, **caractérisé en ce que**
la chambre (15) de mesure a un hublot (19).

12. Dispositif (1) suivant l'une des revendications précédentes, **caractérisé en ce que**
l'adaptateur (35) de connexion peut être fixé au récipient (5) au moyen d'un vissage.

13. Récipient (5) pour un milieu ayant une température élevée comprenant un dispositif (1) suivant l'une des revendications précédentes.

14. Machine (2) frigorifique ou circuit (3) de refroidissement, comportant un dispositif (1) suivant l'une des revendications précédentes.
